(19) Europäisches Patentamt

European Patent Office

Office européen des brevets

(11) Veröffentlichungsnummer: **0 264 687 B1**

(12) **EUROPÄISCHE PATENTSCHRIFT**

(45) Veröffentlichungstag der Patentschrift: **04.03.92**

(51) Int. Cl.5: **G01B 5/20**, G01B 7/28

(21) Anmeldenummer: **87114380.6**

(22) Anmeldetag: **02.10.87**

(54) **Messvorrichtung zur Formmessung von Zylindern.**

(30) Priorität: **13.10.86 DE 3634816**

(43) Veröffentlichungstag der Anmeldung:
**27.04.88 Patentblatt 88/17**

(45) Bekanntmachung des Hinweises auf die
Patenterteilung:
**04.03.92 Patentblatt 92/10**

(84) Benannte Vertragsstaaten:
**CH FR GB IT LI SE**

(56) Entgegenhaltungen:
**DE-A- 3 024 331**
**DE-U- 8 435 914**
**FR-A- 1 544 088**

**PATENT ABSTRACTS OF JAPAN Band 7, Nr.**
**290 (P-245) (1435) 24. Dezember 1983; & JP-**
**A-58 165 001**

(73) Patentinhaber: **BBC PAT MESSTECHNIK GmbH**
**Erzbergerstrasse 115**
**W-7500 Karlsruhe 1(DE)**

(72) Erfinder: **Wamser, Manfred**
**Kaiserallee 15B**
**W-7500 Karlsruhe 1(DE)**
Erfinder: **Overlach, Knud, Dr.-Ing.**
**Ernst-Barlach-Ring 11**
**W-7505 Ettlingen 6(DE)**

(74) Vertreter: **Geitz, Heinrich, Dr.-Ing.**
**Postfach 2708 Kaiserstrasse 156**
**W-7500 Karlsruhe 1(DE)**

**Beschreibung**

Die Erfindung bezieht sich auf eine Meßvorrichtung zur Formmessung von Zylindern, die einen mittels eines translatorisch bewegbaren und in Zylinderräume einführbaren Meßarms geführten Meßfühler mit einem längs seiner Achse bewegbaren Taststift zum Abtasten der Geometrie von Zylinderwandungen besitzt.

Aus der FR-A-1 544 088 ist eine Meßvorrichtung dieser Art bekannt, bei der am Ende eines translatorisch bewegbaren Meßarms ein Meßfühler mit einem längs seiner Achse bewegbaren Taststift angeordnet ist. Der Meßfühler ist dabei um eine quer zur Längserstreckung des Meßarms verlaufende Achse am Meßarm angelenkt und mithin mit seinem Taststift auf einer sich um die Anlenkachse herum erstreckenden Kreislinie über mehr als 300° Umfangswinkel verschwenkbar. Auf diese Weise können die Wandungen längsseitig geschlitzter Zylinderräume vom Taststift abgetastet werden, nachdem der Meßarm mit dem an seinem Ende angeordneten Meßfühler von der Seite her durch den sich parallel zur Zylinderachse erstreckenden Längsschlitz in einen zu vermessenden Zylinderraum eingeführt worden ist.

Völlig ungeeignet hingegen ist die vorbekannte Meßvorrichtung zum Vermessen peripher geschlossener Zylinderräume. Durch die Erfindung soll aber eine in peripher geschlossene Zylinderräume in Richtung der Zylinderachse einführbare Meßvorrichtung geschaffen werden.

Eine Meßvorrichtung dieser Zweckbestimmung ist bereits aus der DE-PS 30 24 331 bekannt. Es handelt sich dabei um eine Vorrichtung zum Vermessen des Zylinderverzugs in Zylinderräumen, die einen in derartige Zylinderräume einführbaren und in Umfangsrichtung antreibbaren Meßarm besitzt, auf dem ein längs der Meßarmachse translatorisch antreibbarer Meßfühler mit einem im Gehäuse des Meßfühlers radial geführten Taststift zum Abtasten der Geometrie der Innenwand eines zu vermessenden Zylinders axialbeweglich aufgenommen ist.

Diese bekannte Meßvorrichtung hat sich zur Vermessung des Zylinderverzugs von Zylinderräumen und insbesondere zum Vermessen der Zylinder von Brennkraftmaschinen bestens bewährt. Angesichts der unvermeidbaren Radialausdehnung des axialbeweglich, aber drehfest auf dem seinerseits in Umfangsrichtung antreibbaren Meßarm aufgenommenen Meßfühlers ist diese Meßvorrichtung aber nur zum Vermessen von Zylinderräumen geeignet, deren Radialausnehmung ein vorbestimmtes Durchmessermaß nicht unterschreitet. Nicht vermessen werden können hingegen mit der vorbekannten Meßvorrichtung Zylinderräume unterhalb eines vorbestimmten Durchmessermaßes.

Die Aufgabe der vorliegenden Erfindung besteht daher in der Schaffung einer Meßvorrichtung zur Formmessung von schlanken Zylindern in einem weit unter dem Einsatzbereich der vorbekannten Meßvorrichtung liegenden Durchmesserbereich.

Ausgehend von dem vorstehend erläuterten Stande der Technik ist diese Erfindungsaufgabe dadurch gelöst, daß bei der Meßvorrichtung nach dem Oberbegriff des Patentanspruchs 1 sich als Meßarm ein biegesteif ausgebildeter fingerartiger Tastkörper vom Ende eines mittels Antriebsmotoren translatorisch und rotatorisch bewegbaren Antriebsarms achsparallel zu diesem forterstreckt und mit dem Antriebsarm wirkverbunden ist, daß innerhalb des Tastkörpers an dessen vom Antriebsarm entfernten Ende der Meßfühler angeordnet ist und daß lediglich die Spitze des Taststiftes radial über den Tastkörper vorsteht.

Im Gegensatz zu der vorbekannten Meßvorrichtung nach der DE-PS 30 24 331 ist bei der Erfindung der Meßarm ein fingerartiger schlanker Tastkörper, der an seinem von einem axial und rotatorisch antreibbaren Antriebsarm entfernten Ende mit einem fest angeordneten Meßfühler ausgerüstet und mit letzterem sowohl axial als auch in Umfangsrichtung antreibbar ist. Angesichts der Anordnung des Meßfühlers am Ende des schlanken, biegesteif ausgeführten Tastkörpers, über den lediglich die Spitze des Taststiftes des Meßfühlers radial vorsteht, ist ein im Vergleich zu der vorbekannten Meßvorrichtung extrem schlanker Aufbau der Gesamtanordnung aus Meßarm und Meßfühler verwirklicht, bei dem die Mittel zum Führen des Meßfühlers in Bereiche außerhalb der zu vermessenden Zylinderräume verlagert sind. Dies ermöglicht das Vermessen extrem schlanker Zylinderräume.

Eine weitere wichtige Ausgestaltung der Erfindung ist dadurch gekennzeichnet, daß der Meßfühler eine mit Dehnungsmeßstreifen ausgerüstete, sich im wesentlichen in Tastkörperlängsrichtung erstreckende Blattfeder besitzt, die mit ihrem vom Taststift entfernten Ende im Tastkörper eingespannt ist und an deren von der Einspannstelle entfernten Ende der mit seiner Spitze über den Tastkörper vorstehende Taststift angreift.

Eine derartige Blattfeder, die in Abhängigkeit von Bewegungen des Taststiftes längs seiner Achse mehr oder weniger große Durchbiegungen erfährt, kann die Rückstellkraft extrem klein gehalten werden, so daß bei einem Meßvorgang nur minimalste Biegekräfte auf die Blattfeder wirken und der sich vom Ende des Antriebsarms achsparallel zu diesem forterstreckende Tastkörper, der biegesteif ausgeführt ist, praktisch frei von Biegebeanspruchungen bleibt. Bei sich radial zum Tastkörper erstreckendem und in einer entsprechend gerichteten Führung bewegbaren Taststift greift dessen von seiner Spitze entferntes Ende senkrecht zur Längserstreckung der Blattfeder an deren freien Ende an, so daß allenfalls zusätzlich zu den über die Einspannstelle der Blattfeder in den Tastkörper eingeleiteten minimalen Biegemomente noch als Biegekräfte die bei der Axialverschiebung des Taststiftes senkrecht zur Längsachse des Tastkörpers auftretenden Reibungskräfte wirken können, die jedoch extrem klein sind. Bei in Axialrichtung des Tastkörpers bewegbar geführtem Taststift kann dessen von seiner Spitze entferntes Ende hingegen auf eine entsprechende Abkröpfung der Blattfeder an deren von der Einspannstelle entferntem Ende wirken.

Eine andere vorteilhafte Ausgestaltung der Erfindung sieht vor, daß der Tastkörper uber einen radial zur Drehachse des Antriebsarms verschiebbaren Schlitten mit dem Antriebsarm verbunden und dadurch innerhalb eines vorbestimmten Verstellbereichs auch unterschiedliche Radien der zu vermessenden Zylinder einstellbar ist.

Bei einer Weiterbildung dieser Ausgestaltung hat es sich als vorteilhaft erwiesen, wenn der Meßfühler mit dem mit seiner Spitze über den Tastkörper vorstehenden Taststift gegenüber dem Antriebsarm um die Längsachse des Tastkörpers in Umfangsrichtung um 180° verstellbar ist, so daß über die Richtungswahl des Taststiftes in der einen oder anderen Einstellage eine zylindrische Außen- oder Innenform vermessen werden kann.

Bei der letztgenannten Weiterbildung kann der Tastkörper gegenüber dem seine Radialeinstellung vermittelnden Schlitten um seine Längsachse um 180° verdrehbar gelagert und einstellbar sein oder der Meßfühler kann gegenüber einem mit dem Antriebsarm drehfest verbundenen Abschnitt des Tastkörpers um die Tastkörperlängsachse um 180° verdrehbar gelagert und in den jeweiligen Einstellagen feststellbar sein.

Eine weitere zweckmäßige Ausgestaltung der Erfindung sieht vor, daß mit dem Ende das Antriebsarms zwei in ihrem gegenseitigen Abstand zueinander und hinsichtlich ihrer radialen Lagen gegenüber der Drehachse des Antriebsarms einstellbare Tastkörper mit an den vom Antriebsarm entfernten Enden angeordneten Meßfühlern mit entgegengesetzt zueinander gerichteten Spitzen ihrer Taststifte wirkverbunden sind. Eine derartige Ausgestaltung ermöglicht in besonders einfacher Weise die gleichzeitige Vermessung der Innen- und Außenkontur sowie der Wandstärken von Zylinderbuchsen.

Gemäß einer anderen Ausgestaltung, die zu einem einfachen und zweckmäßigen Vorrichtungsaufbau führt, weist der Antriebsarm, vom dem sich der als schlanker und biegesteifer Tastkörper ausgebildete Meßarm forterstreckt, eine mit einem Antriebsmotor in Antreiebszerbindung ste ende Führungs ülse auf, die innerhalb eines Führungsrohrs drehbar und axialbeweglich aufgenommen und mit der eine mit einer von einem zweiten Antriebsmotor antreibbaren Spindel zusammenwirkende Spindelmutter dreh- und axialfest verbunden ist. Die Spindelmutter und die Führungshülse können in einfacher Weise über formschlüssig in letztere eingreifende Mitnehmer dreh- und axialfest miteinander verbunden sein.

Bei einer derartigen Vorrichtung vermittelt die Spindel und die damit zusammenwirkende Spindelmutter den translatorischen Antrieb des Antriebsarms, während dessen Drehantrieb von dem mit der Führungshülse in Antriebsverbindung stehenden Antriebsmotor abgeleitet ist.

Als besonders vorteilhalt hat sich eine Ausgestaltung der Erfindung dergestalt erwiesen, daß die Antriebsverbindung zwischen der Führungshülse des Antriebsarms und dem einen Antriebsmotor eine von letzterem antreibbare, koaxial zur Spindel gelagerte Antriebswelle mit einer sich längs der Spindel innerhalb der Führungshülse erstreckenden und mit letzterer und/oder der Spindelmutter drehfest zusammenwirkenden Mitnehmergabel umfaßt. Angesichts des Zusammenwirkens der Mitnehmergabel mit der Spindelmutter und/oder der Führungshülse sind letztere und die Spindelmutter drehfest mit der Antriebswelle gekuppelt, gegenüber letzterer aber innerhalb der durch die Längserstreckung der Mitnehmergabel gegenbenen Grenzen axialbeweglich. Mit Vorteil kann die Mitnehmergabel mit in Parallellage zueinander verlaufenden Gabelarmen in Längsnuten der Spindelmutter formschlüssig eingreifen, was zu einem einfachen Aufbau und einem präzisen Zusammenwirken der einander längsbeweglich zugeordneten und in Umfangsrichtung gekuppelten Teilen führt. Als zweckmäßig hat sich dabei auch erwiesen, wenn die Mitnehmergabel der Antriebswelle beidendig geschlossen und an beiden Enden gelagert ist.

Eine Ausführungsform der Erfindung soll nachstehend anhand der beigefügten Zeichnung veranschaulicht werden. In schematischen Ansichten zeigen:

Fig. 1    eine schematische Gesamtansicht der Meßvorrichtung mit einem mittels eines Schlittens mit dem Ende eines rotatorisch und axialbewgbaren Antriebsarms dreh- und axialfest verbundenen Tastkörper mit einem an dem vom Antriebsarm entfernten Ende angeordneten Meßfühler mit einem mit seiner Spitze radial über den Tastarm vorstehenden Taststift,

Fig. 2    in einer Ausschnittansicht gemäß II in Fig. 1 den Tastkörper und den dessen Verbindung mit dem Antriebsarm vermittelnden Schlitten in vergrößerter Darstellung,

Fig. 3     den Tastkörper in einer axialen Vorschublage und einer um 90° gegenüber Fig. 2 veränderten Drehstellung,

Fig. 4     eine Einstellung des Tastkörpers in einer gegenüber Fig. 2 um 180° um die Tastkörperlängsachse gegenüber dem Schlitten verdrehten Stellung,

Fig. 5     in einer vergrößerten Ausschnittansicht gemäß V in Fig. 3 den vom Antriebsarm entfernten teil des Tastkörpers, in dem der Meßfühler aufgenommen ist,

Fig. 6     einen Längsschnitt gemäß der Schnittlinie VI-VI in Fig. 5 durch das Tastkörperende mit dem Meßfühler,

Fig. 7     einen Längsschnitt gemäß der Schnittlinie VII-VII in Fig. 3 durch den die einstellbare Verbindung des Tastkörpers mit dem Antriebsarm vermittelnden Schlitten und

Fig. 8     ebenfalls einen Längsschnitt durch den Schlitten, jedoch gemäß der Schnittlinie VIII-VIII in Fig. 7.

Fig. 9     in einer teilweise geschnittenen Ausschnittansicht gemäß IX in Fig. 1 den Antrieb des in einem gehäusefesten Führungsrohr drehbar und axialbeweglich aufgenommenen Antriebsarm,

Fig. 10     einen Querschnitt gemäß der Schnittlinie X-X in Fig. 9 durch das Fürungsrohr und eine Führungshülse des Antriebsarms mit einer zugeordneten Spindelmutter und

Fig. 11     in einer gegenüber Fig. 9 um 90° versetzten Ansicht einen Teillängsschnitt gemäß der Schnittlinie XI-XI in Fig. 10 durch den Antriebsarm und das letzteren lagernde Führungsrohr.

Die Meßvorrichtung besitzt einen in unten noch zu beschreibender Weise innerhalb eines Führungsrohrs 10 axialbeweglich und drehbar gelagerten Antriebsarm 11, der mittels je eines in einem Gehäuse 12 aufgenommenen nicht gezeigten Antriebsmotors rotatorisch und in axialer Richtung antreibbar ist. Mit dem Ende des Antriebsarms ist mittels eines Schlittens 13, der unten noch näher erläutert wird, ein fingerartig ausgebildeter biegesteifer Tastkörper 14 dreh-und axialfest verbunden, der sich achsparallel zum Antriebsarm von diesem bzw. einer an dem Ende des Antriebsarms angebrachten Schlittenführung forterstreckt. Auf dem vom Antriebsarm entfernten Ende des Tastkörpers 14 ist ein Schutzrohr 15 aufgenommen und mittels eingesenkter Schrauben 16, 16′ mit dem Tastkörper fest verbunden, das einen Meßfühler 18 umschließt.

Der Meßfühler 18 besitzt einen an dem vom Antriebsarm 11 entfernten Ende des Tastkörpers radial geführten Taststift 20, dessen Spitze 21 über das auf dem Ende des Tastkörpers 14 aufgenommene Schutzrohr 15 radial vorsteht. Der Taststift 20 ist in einer Führungshülse 22 längs seiner rechtwinklig zur Tastkörperlängsachse verlaufenden Achse verschiebbar. Die Beweglichkeit des Taststiftes radial nach außen ist durch eine Halteplatte 23 begrenzt, durch die sich in einer Ausnehmung die Taststiftspitze 21 hindurcherstreckt und die einen Anschlag für eine den Übergang zur Spitze 21 des Taststiftes 20 vermittelnde Schulter 24 bildet. Die Führungshülse 22 und die Halteplatte 23 sind in dem vom Schutzrohr 15 umschlossenen Endabschnitt 25 des Tastkörpers aufgenommen und mit diesem Endabschnitt ist die Halteplatte 23 mittels einer eingesenkten Schraube 26 fest verbunden.

Innerhalb des Schutzrohrs 15 erstreckt sich im Endabschnitt 25 des Tastkörpers eine Blattfeder 28 im wesentlichen in Richtung der Tastkörperlängsachse, deren zum Antriebsarm 11 hinweisendes ende zwischen Spannplatten 29, 29′ aufgenommen und durch Verschrauben mittels einer Befestigungsschraube 30 mit dem Endabschnitt 25 fest eingespannt ist. Das andere Ende der Blattfeder 28 liegt hingegen an einem halbkugelartigen Kopf 31 des Taststiftes 20 an, so daß der Taststift von der Blattfeder 28 mit minimaler Vorspannung radial nach außen in die durch das Anliegen seiner Schulter 24 an der als Anschlag wirkenden Halteplatte 23 bestimmte Endlage gedrückt wird und bei Verschiebungen des Taststiftes radial nach innen die Blattfeder eine begrenzte Durchbiegung erführt.

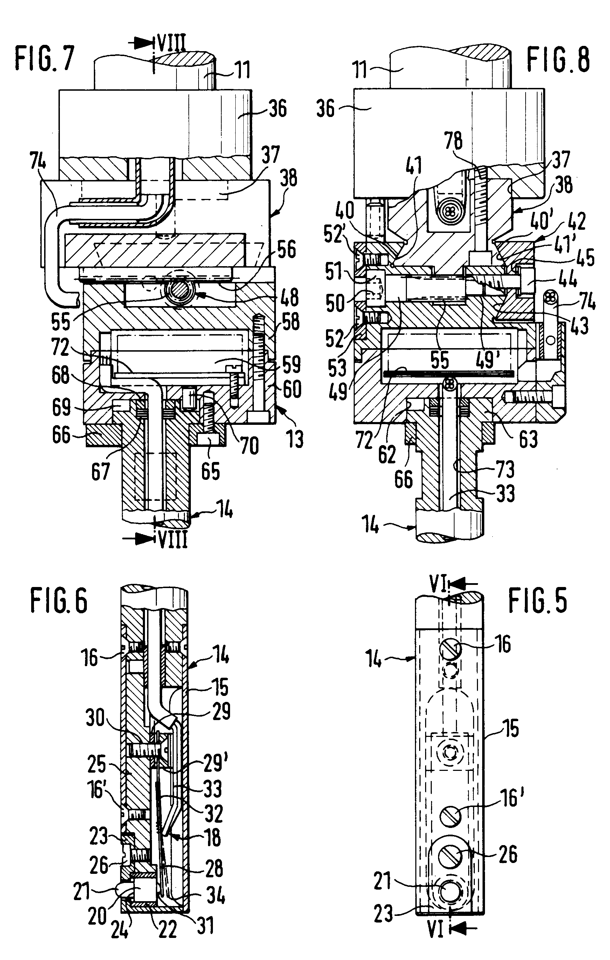

Die Durchbiegungen der Blattfeder 28 in Abhängigkeit von den beispielsweise beim Abtasten eines zu vermessenden Zylinders auftretenden Radialbewegungen des Taststiftes werden mittels auf die Blattfeder aufgeklebter Dehnungsmeßstreifen 32 erfaßt, die über nur angedeutete Leitungen 33 mit hier nicht weiter interessierenden Geräten zum Verarbeiten der so gewonnenen elektrischen Signale in Verbindung stehen. Eine Auslenklage der Blattfeder 28 ist in Fig. 6 in gestrichelten Linien bei 34 angedeutet.

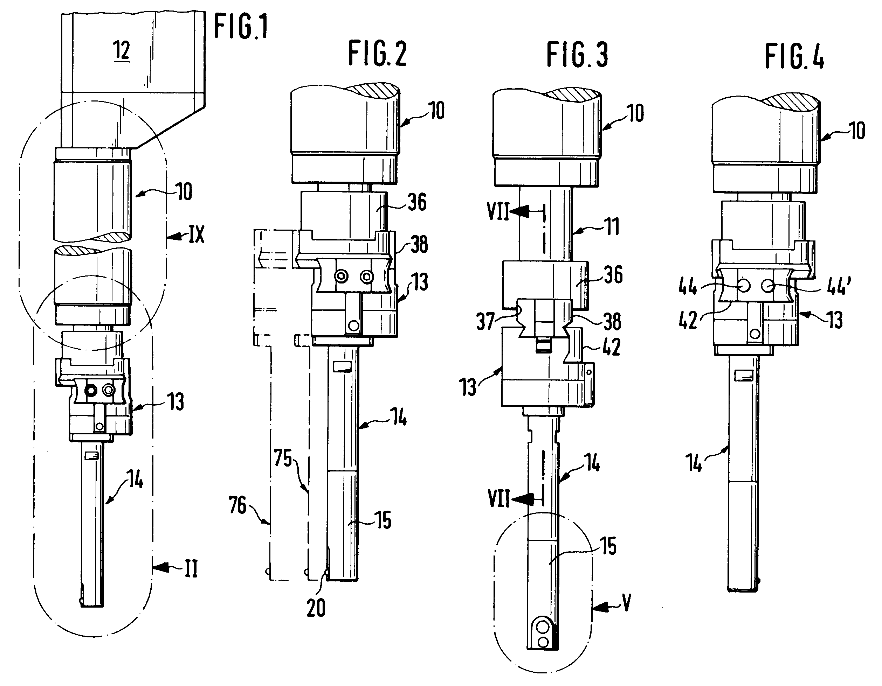

Die dreh- und axialfeste, aber einstellbare Verbindung des Tastkörpers 14 mit dem Antriebsarm 11 zeigen am besten die Fig. 2 bis 4 in Verbindung mit den Fig. 7 und 8.

Mit dem Ende des Antriebsarms 11 ist eine Verbindungshülse 36 dreh- und axialfest verbunden, die in einer sich auf der vom Antriebsarm entfernten Seite rechtwinklig zur Längsachse des Antriebsarms erstreckenden Führungsausnehmung 37 ein Führungsstück 38 aufnimmt. Auf der von der Verbindungshülse entfernten Seite besitzt dieses Führungsstück eine sich quer zur Längsachse des Antriebsarms und parallel zu der Führungsausnehmung 37 erstreckende Schwalbenschwanzführung

40, 40′, die von Führungsflächen 41, 41′ des Schlittens 13 umgriffen ist. Die eine Führungsfläche 41 ist dem Schlitten fest zugeordnet, während die andere Führungsfläche 41′ von einem Teil einer Führungsleiste 42 gebildet wird, die sich mit einer in Bezug auf ihre Längserstreckung symmetrischen Führungsfläche 43 am Schlitten abstützt und mit diesem mittels zweier Befestigungsschrauben 44, 44′ unter Zwischenlage von Tellerfederpaketen 45 verbunden ist.

Von der von der Führungsleiste 42 entfernten Seite aus erstreckt sich in einer gegenüber der Schwalbenschwanzführung um 90° versetzten Lage rechtwinklig zur Längsachse des Antriebsarms 11 ein drehbar gelagerter Einstellzapfen 48 in den Schlitten hinein, der innerhalb des Schlittens mit präzise geführten Zapfenabschnitten 49, 49′ gelagert ist und einen mit einer inneren Schlüsselansatzfläche 50 versehenen Zapfenkopf 51 aufweist. Der Zapfenkopf ist innerhalb einer in den Schlitten eingesenkten Ausnehmung aufgenommen und außenseitig durch eine mittels Senkschrauben 52, 52′ am Schlitten festgelegte Halteplatte 53 gesichert, durch die sich eine mit der inneren Schlüsselansatzfläche 50 fluchtende Bohrung hindurcherstreckt, so daß mittels eines durch diese Bohrung hindurch in die innere Schlüsselausnehmung eingesetzten Schlüssels mit Außensechskant eine Drehung des Einstellzapfens 48 gelingt. Zwischen den die Drehlagerung des Einstellzapfens 48 im Schlitten vermittelnden Zapfenabschnitten 49, 49′ ist der Einstellzapfen mit einer Verzahnung 55 versehen, die mit der Verzahnung einer Zahnstange 56 zusammenwirkt, welche sich zwischen den schwalbenschwanzartigen Führungsflächen 40, 40′ des Führungsstücks 38 erstreckt und einstückig mit diesem ausgebildet ist.

Mit dem den Einstellzapfen 48 lagernden Teil 58 des Schlittens 13 ist unter Ausbildung einer inneren Kammer 59 ein Schlittenteil 60 fest verbunden, in das sich auf der vom Antriebsarm 11 entfernten Seite eine zylindrische Lagerausnehmung 62 hineinerstreckt, in der ein Lagerabschnitt 63 des Tastkörpers 14 aufgenommen ist, der in der Art eines Ringflansches radial über den Tastkörper hinausragt und mittels einer mit dem genannten Schlittenteil 60 mittels Befestigungsschrauben 65 fest verbundenen Halteplatte 66 in seiner Lage gesichert ist. In einer stirnseitigen inneren Ausnehmung des Tastkörpers im Bereich des Lagerabschnittes 63 ist ein Tellerfederpaket 67 aufgenommen, das sich über einen Zwischenring 68 am Schlittenteil 60 abstützt und eine spielfreie Lagerung des Tastkörpers am Schlitten vermittelt. Von seiner Stirnseite aus erstreckt sich in den Lagerabschnitt 63 des Tastkörpers 14 eine Umfangsnut 59 hinein, in die ein im Schlittenteil 60 fest aufgenommener Anschlag stift 70 eingreift. Diese Umfangsnut erstreckt sich über einen solchen Umfangsbereich, daß der Tastkörper 14 gegenüber dem Schlitten um seine Längsachse um 180° drehbar ist, so daß eine Einstellung des Taststiftes 20 des Meßfühlers in die aus den Fig. 2 und 4 ersichtlichen, um 180° gegeneinander versetzten Lagen gelingt.

Innerhalb der zwischen den beiden Schlittenteilen gebildeten inneren Kammer 59 befindet sich eine Tragplatte 72 mit nicht weiter dargestellten Verstärkungsgliedern, die über die in den Fig. 7 und 8 nur angedeutete elektrische Leitungsverbindung 33, die sich durch eine Mittelausnehmung 73 des Tastkörpers hindurcherstreckt, mit den auf die Blattfeder 28 aufgeklebten Dehnungsmeßstreifen 32 in Leitungsverbindung stehen. Eine von den nicht dargestellten Verstärkungselementen fortführende Leitung 74 zur Übermittlung der Meßsignale an einen hier nicht weiter interessierenden Rechner ist in Fig. 8 ersichtlich.

Bei der Einstellung der Meßvorrichtung gemäß Fig. 2 zur Vermessung der Innenkontur eines Zylinders gelingt die Radialeinstellung des Tastkörpers 14 entsprechend dem Durchmessermaß des zu vermessenden Zylinders in einfacher Weise durch Drehung des drehbar, aber axialfest im Schlittenteil 58 gelagerten Einstellzapfens 48 nach der einen oder anderen Richtung. Durch geringfügiges Lösen der an der einen Schwalbenschwanzführung des Führungsstücks 38 angreifenden Führungsleiste 42 wird die Radialverstellung des Tastkörpers 14 erleichtert. Durch den Eingriff der Verzahnung 55 in die Zahnstange 56 des Führungsstücks 38 erfährt infolge der Drehung des Einstellzapfens 48 der Schlitten 13 eine Verschiebung längs der Schwalbenschwanzführung und damit radial zum Antriebsarm. In gestrichelten Linien ist bei 75 in Fig. 2 die maximal verwirklichbare Radialeinstellung des Tastkörpers 14 angedeutet.

Eine Erweiterung des Einsatzbereichs der Meßvorrichtung bis zu der in Fig. 2 in strichpunktierten Linien bei 76 angedeuteten Lage des Tastkörpers ist möglich, indem das in der Führungsausnehmung 37 aufgenommene Führungsstück 38 in einer Lage unsymmetrisch zur Längsachse des Antriebsarms 11 mit der Verbindungshülse 36 verbunden wird. Eine in Bezug auf die genannte Längsachse unsymmetrische Anordnung des Führungsstücks 38 gelingt nach dem Abnehmen des Schlittens 13 vom Führungsstück, indem die das Führungsstück mit der Verbindungshülse verbindenden Befestigungsschrauben 78 entfernt und das Führungsstück nach dem radialen Versetzen um wenigstens ein Teilungsmaß zwischen den die Befestigungsschrauben aufnehmenden Schraubenlöchern radial in der Führungsausnehmung verschoben sowie anschließend mittels der Befestigungsschrauben 78 in der radialen Verstellage wieder befestigt wird.

Die Einstellung der Meßvorrichtung zum Vermessen der Außenkontur eines Zylinders zeigt Fig. 4. Für diese Einstellung wird bei feststehendem Antriebsarm 11 der Tastkörper 14 mit seinem in der Lagerausnehmung 62 des Schlittens aufgenommenen Lagerabschnitt 63 um seine Längsachse um 180° verdreht, so daß der Taststift 20 des Meßfühlers 18 mit seiner Spitze 21 in zur Einstellage nach Fig. 2 entgegengesetzte Richtung weist. Begrenzt wird die Verdrehbarkeit des Tastkörpers 14 gegenüber dem Schlitten 13 durch das Zusammenwirken des Führungsstiftes 70 mit der Umfangsnut 69 im Lagerabschnitt 63 des Tastkörpers. Gehalten ist der Tastkörper in der jeweiligen Einstelllage reibungsschlüssig durch die von dem Tellerfederpaket 67 aufgebrachte Spannkraft. Die Radialeinstellung zur Anpassung an das Durchmessermaß eines zu vermessenden Außenzylinders erfolgt in der oben in Verbindung mit Fig. 2 erläuterten Weise.

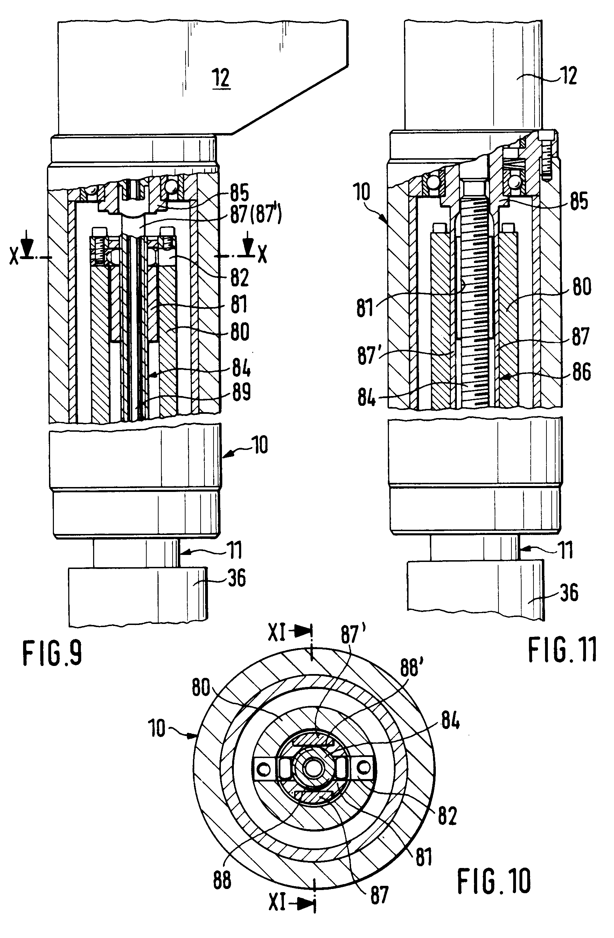

Der Antriebsarm 11 mit der an dem über das gehäusefeste Führungsrohr 10 hinausragenden Ende angeordneten Verbindungshülse 36 besitzt eine Führungshülse 80, die im Führungsrohr drehbar und axialbeweglich aufgenommen ist. Am anderen Ende ist in dieser Führungshülse eine Spindelmutter 81 aufgenommen Die Spindelmutter und die Führungshülse sind über in Radialausnehmungen dieser Teile formschlüssig eingreifende Mitnehmer 82 dreh- und axialfest miteinander verbunden. Die Mitnehmer 82 sind mittels Halteschrauben 83 in ihren die dreh- und axialfeste Verbindung der Spindelmutter 81 mit der Führungshülse 80 vermittelnden Lagen gehalten. Innerhalb der Spindelmutter erstreckt sich eine mit dieser zusammenwirkende Spindel 84 entlang, die mit einem nicht gezeigten Antriebsmotor in Antriebsverbindung steht. Koaxial zu dieser Spindel ist eine mit einem anderen Antriebsmotor in Antriebsverbindung stehende Antriebswelle 85 angeordnet, welche die Spindel 84 umschließt und eine sich innerhalb er Führungshülse längs der Spindel erstreckende Mitnehmergabel 86 besitzt, deren parallel zueinander verlaufende Gabelarme 87, 87′ in Längsnuten 88, 88′ der Spindelmutter 81 formschlüssig eingreifen. Diese Längsnuten sind, wie insbesondere Fig. 10 zeigt, gegenüber den die dreh- und axialfeste Verbindung zwischen der Führungshülse 80 und der Spindelmutter 81 vermittelnden Mitnehmern 82 in Umfangsrichtung um 90° versetzt angeordnet. Die Spindel 84 ist als Hohlspindel ausgebildet und innerhalb der Spindel erstreckt sich eine zum Meßarm 14 hinführende Leitung 89 fort, deren Beschaffenheit hier nicht weiter interessiert.

Wenn die mit dem einen der beiden Antriebsmotoren in Antriebsverbindung stehende Spindel 84 rotatorisch angetrieben wird, erfährt die mit der Spindel zusammenwirkende Spindelmutter 81 eine Axialbewegung, was aber angesichts der dreh- und axialfesten Kupplung der Spindelmutter 81 mit der Führungshülse 80 gleichbedeutend mit einem Ein- oder Ausfahren des Meßarms 11 ist. Diese Axialbewegung findet ohne jede Behinderung durch den vom anderen Antriebsmotor über die Antriebswelle 85 mit der Mitnehmergabel 86 abgeleiteten Drehantrieb statt. Die Drehverbindung zwischen der mit dem anderen Antriebsmotor in Antriebsverbindung stehenden Antriebswelle 85 und der Führungshülse 80 des Antriebsarms 11 bleibt durch die in die Längsnuten 88, 88′, der Spindelmutter 81 eingreifenden Gabelarme 87, 87′ der Mitnehmergabel 86 über den gesamten axialen Bewegungsbereich der Führungshülse 80 bzw. des Antriebsarms 11 aufrechterhalten.

## Patentansprüche

1. Meßvorrichtung zur Formmessung von Zylindern, die einen mittels eines translatorisch bewegbaren und in Zylinderräume einführbaren Meßarms geführten Meßfühler mit einem längs seiner Achse bewegbaren Taststift zum Abtasten der Geometrie von Zylinderwandungen besitzt, dadurch gekennzeichnet, daß sich als Meßarm ein biegesteif ausgebildeter fingerartiger Tastkörper (14) vom Ende eines mittels Antriebsmotoren translatorisch und rotatorisch bewegbaren Antriebsarms (11) achsparallel zu diesem forterstreckt und mit dem Antriebsarm wirkverbunden ist, daß innerhalb des Tastkörpers an dessen vom Antriebsarm entfernten Ende der Meßfühler (18) angeordnet ist und daß lediglich die Spitze des Taststiftes (20) radial über den Tastkörper vorsteht.

2. Meßvorrichtung nach Anspruch 1, dadurch gekennzeichnet, daß der Meßfühler (18) eine mit Dehnungsmeßstreifen (32) ausgerüstete, sich im wesentlichen in Tastkörperlängsrichtung erstreckende Blattfeder (28) besitzt, die mit ihrem vom Taststift (20) entfernten Ende im Tastkörper (14) eingespannt ist und an deren von der Einspannstelle entferntem Ende der mit seiner Spitze (21) über den Tastkörper vorstehende Taststift angreift.

3. Meßvorrichtung nach Anspruch 1 oder 2, dadurch gekennzeichnet, daß der Tastkörper (14) über einen radial zur Drehachse des Antriebsarms (11) verschiebbaren Schlitten (13) mit dem Antriebsarm verbunden und dadurch innerhalb eines vorbestimmten Verstellbereichs auf unterschiedliche Radien der zu vermessenden Zylinder einstellbar ist.

4. Meßvorrichtung nach Anspruch 3, dadurch gekennzeichnet, daß der Meßfühler (18) mit dem mit seiner Spitze (21) über den Tastkörper (14) vorstehenden Taststift (20) gegenüber dem Antriebsarm (11) um die Längsachse des Tastkörpers in Umfangsrichtung um 180° verstellbar ist.

5. Meßvorrichtung nach Anspruch 4, dadurch gekennzeichnet, daß der Tastkörper (14) gegenüber dem seine Radialeinstellung vermittelnden Schlitten (13) um seine Längsachse um 180° verdrehbar gelagert ist.

6. Meßvorrichtung nach Anspruch 4, dadurch gekennzeichnet, daß der Meßfühler (18) gegenüber einem mit dem Antriebsarm (11) drehfest verbundenen Abschnitt des Tastkörpers (14) um dessen Längsachse um 180° verdrehbar gelagert ist.

7. Meßvorrichtung nach einem der Ansprüche 1 bis 6, dadurch gekennzeichnet, daß mit dem Ende des Antriebsarms (11) zwei in ihrem gegenseitigen Abstand zueinander und hinsichtlich ihrer radialen Lagen gegenüber der Drehachse des Antriebsarms einstellbare Tastkörper (14) mit an den vom Antriebsarm entfernten Enden angeordneten Meßfühlern mit entgegengesetzt zueinander gerichteten Spitzen ihrer Taststifte wirkverbunden sind.

8. Meßvorrichtung nach einem der Ansprüche 1 bis 7, dadurch gekennzeichnet, daß der Antriebsarm (11), von dem sich der als schlanker und biegesteifer Tastkörper ausgebildete Meßarm (14) forterstreckt, eine mit einem Antriebsmotor in Antriebsverbindung stehende Führungshülse (80) aufweist, die innerhalb eines Führungsrohrs (10) drehbar und axialbeweglich aufgenommen und mit der eine mit einer von einem zweiten Antriebsmotor antreibbaren Spindel (84) zusammenwirkende Spindelmutter (81) dreh- und axialfest verbunden ist.

9. Meßvorrichtung nach Anspruch 8, dadurch gekennzeichnet, daß die Spindelmutter (81) und die Führungshülse (80) über formschlüssig in letztere eingreifende Mitnehmer (82) dreh- und axialfest miteinander verbunden sind.

10. Meßvorrichtung nach Anspruch 8 oder 9, dadurch gekennzeichnet, daß die Antriebsverbindung zwischen der Führungshülse (80) des Antriebsarms (11) und dem einen Antriebsmotor eine von letzterem antreibbare, koaxial zur Spindel (84) gelagerte Antriebswelle (85) mit einer sich längs der Spindel innerhalb der Führungshülse erstreckenden und mit letzterer und/oder der Spindelmutter (81) drehfest zusammenwirkenden Mitnehmergabel (86) umfaßt.

11. Meßvorrichtung nach Anspruch 10, dadurch gekennzeichnet, daß die Mitnehmergabel (86) mit in Parallellage zueinander verlaufenden Gabelarmen (87, 87') in Längsnuten der Spindelmutter (81) formschlüssig eingreift.

12. Meßvorrichtung nach Anspruch 11, dadurch gekennzeichnet, daß die Mitnehmergabel (86) der Antriebswelle (85) beidendig geschlossen und an beiden Enden gelagert ist.

**Claims**

1. Measuring device for measuring the shape of cylinders, which possesses a measuring sensor, which is guided by means of a measuring arm movable in translation and introducible into the cylinder space, with a feeler movable along its axis for the sensing of the geometry of cylinder walls, characterised thereby that a finger-like sensor body (14), which is constructed to be resistant to bending, as measuring arm extends from the end of a drive arm (11), which is movable rotationally and in translation by mean of a drive motor, axially parallel thereto and is operatively connected to the drive arm, that the sensor (18) is arranged within the sensor body at the end thereof remote from the drive arm and that merely the tip of the feeler (20) projects radially beyond the sensor body.

2. Measuring device according to claim 1, characterised thereby that the sensor (18) possesses a leaf spring (28), which is equipped with strain measuring strips (32), extends substantially in the longitudinal direction of the sensor body, is clamped in the sensor body (14) by its end remote from the feeler (20) and at the end thereof remote from the clamping location engages by its tip (21) over the sensor projecting beyond the sensor body.

3. Measuring device according to claim 1 or 2, characterised thereby that the sensor body (14) is connected with the drive arm (11) by way of a slide (13) radially displaceable relative to the rotational axis of the drive arm and is thereby settable within a predetermined adjusting range to different radii of the cylinder to be measured.

4. Measuring device according to claim 3, characterised thereby that the sensor (18), with the feeler (20) projecting by its tip (21) beyond the sensor body (14), is adjustable in circumferential direction through 180° relative to the drive arm (11) about the longitudinal axis of the sensor body.

5. Measuring device according to claim 4, characterised thereby that the sensor body (14) is mounted to be rotatable about its longitudinal axis through 180° relative to the slide (13) determining its radial setting.

6. Measuring device according to claim 4, characterised thereby that the sensor (18) is mounted to be rotatable through 180° relative to a portion of the sensor body and about the longitudinal axis thereof, which portion is connected fast against rotation to the drive arm (11).

7. Measuring device according to one of claims 1 to 6, characterised thereby that two sensor bodies (14) are operatively connected with the end of the drive arm (11), are settable in their mutual spacing relative to one another and with respect to their radial positions relative to the rotational axis of the drive arm, and have feelers which are arranged at the ends remote from the drive arm and which have mutually oppositely directed tips of their feelers.

8. Measuring device according to one of claims 1 to 7, characterised thereby that the drive arm (11), from which extends the measuring arm (14) constructed as slender and bending-resistant sensor body, has a guide sleeve (80), which stands in drive connection with a drive motor, is rotationally and axially movably received within a guide tube (10), and with which a spindle nut (81) co-operating with a spindle (84) drivable by a second drive motor is connected to be rotationally and axially fast.

9. Measuring device according to claim 8, characterised thereby that the spindle nut (81) and the guide sleeve (80) are connected rotationally and axially fast with one another by way of entraining members (82) mechanically positively engaging in the guide sleeve.

10. Measuring device according to claim 8 or 9, characterised thereby that the drive connection between the guide sleeve (80) of the drive arm (11) and the one drive motor comprises a drive shaft (85), which is drivable by the latter and is mounted coaxially with the spindle (84), with an entraining fork (86) which extends along the spindle within the guide sleeve and co-operates in rotationally fast manner with the latter and/or with the spindle nut (81).

11. Measuring device according to claim 10, characterised thereby that the entraining fork (86) mechanically positively engages in longitudinal grooves of the spindle nut (81) by fork arms (87, 87') extending in parallel position relative to one another.

12. Measuring device according to claim 11, characterised thereby that the entraining fork (86) of the drive shaft (85) is closed at both ends and mounted at both ends.

**Revendications**

1. Dispositif de mesure destiné à la mesure de la forme de cylindres, qui comporte un capteur de mesure, guidé à l'aide d'un bras de mesure pouvant subir un déplacement de translation et pouvant être introduit dans des espaces cylindriques, capteur muni d'un palpeur, pouvant se déplacer le long de son axe, pour explorer la géométrie de parois cylindriques, caractérisé en ce que, en tant que bras de mesure, un corps de palpeur (14), en forme de doigt et conçu de façon à être rigide en flexion, s'étend, à partir de l'extrémité d'un bras d'entraînement (11), pouvant subir un déplacement de translation et de rotation à l'aide de moteurs d'entraînement, parallèlement à l'axe de ce bras, et lui est relié d'une manière opérative ; que le capteur de mesure (18) est disposé à l'intérieur du corps de palpeur, en son extrémité éloignée du bras d'entraînement ; et que seule l'extrémité du palpeur (20) dépasse radialement du corps de palpeur.

2. Dispositif de mesure selon la revendication 1, caractérisé en ce que le capteur de mesure (18) comporte un ressort à lames (28), muni d'une jauge extensométrique (32) et s'étendant essentiellement dans le sens longitudinal du corps de palpeur, ressort qui, par son extrémité éloignée du palpeur (20), est serré dans le corps de palpeur (14), et que le palpeur, en saillie par son extrémité (21) au-delà du corps de palpeur, est en prise en son extrémité éloignée du point de serrage.

3. Dispositif de mesure selon la revendication 1 ou 2, caractérisé en ce que le corps de palpeur (14) est, par l'intermédiaire d'un coulisseau (13), pouvant subir un déplacement radial par rapport à l'axe de rotation du bras d'entraînement (11), est relié à ce dernier et de ce fait peut être réglé, à l'intérieur d'un intervalle de réglage prédéfini, sur différents rayons des cylindres à mesurer.

**4.** Dispositif de mesure selon la revendication 3, caractérisé en ce que le capteur de mesure (18) peut, à l'aide du palpeur (20) qui par son extrémité (21) est en saillie par rapport au corps de palpeur (14), tourner d'un angle de 180° autour de l'axe longitudinal du corps de palpeur.

**5.** Dispositif de mesure selon la revendication 4, caractérisé en ce que le corps de palpeur (14) est logé en rotation de façon à pouvoir tourner d'un angle de 180° autour de son axe longitudinal, par rapport au coulisseau (13) qui définit sa position radiale.

**6.** Dispositif de mesure selon la revendication 4, caractérisé en ce que le capteur de mesure (18) est logé en rotation de façon à pouvoir tourner d'un angle de 180° autour de l'axe du corps de palpeur (14), par rapport à une partie du corps de palpeur solidaire, en rotation, du bras d'entraînement (11).

**7.** Dispositif de mesure selon l'une des revendications 1 à 6, caractérisé en ce que, avec l'extrémité du bras d'entraînement (11), deux corps de palpeur (14), dont la distance réciproque peut être ajustée, de même que leurs positions radiales par rapport à l'axe de rotation du bras d'entraînement, sont reliés d'une manière opérative avec des capteurs de mesure, disposés aux extrémités éloignées du bras de mesure, et dont les palpeurs ont des extrémités dirigées en sens inverse.

**8.** Dispositif de mesure selon l'une des revendications 1 à 7, caractérisé en ce que le bras d'entraînement (11), à partir duquel s'étend le bras de mesure (14), conçu comme un corps de palpeur allongé et rigide en flexion, comporte un manchon de guidage (80), en liaison d'entraînement avec un moteur d'entraînement, manchon qui est logé à l'intérieur d'un tube de guidage (10) de façon à pouvoir tourner et subir un déplacement axial, et auquel est relié, d'une manière solidaire en rotation et en déplacement axial, un écrou de broche (81), qui coopère avec une broche (84) pouvant être entraînée par un deuxième moteur d'entraînement.

**9.** Dispositif de mesure selon la revendication 8, caractérisé en ce que l'écrou de broche (81) et le manchon de guidage (80) sont reliés l'un à l'autre, d'une manière solidaire en rotation et en déplacement axial, par l'intermédiaire d'ergots d'entraînement (82), qui entrent en prise avec blocage par correspondance de forme dans le manchon.

**10.** Dispositif de mesure selon la revendication 8 ou 9, caractérisé en ce que la liaison d'entraînement entre le manchon de guidage (80) du bras d'entraînement (11) et l'un des moteurs d'entraînement comporte un bras d'entraînement (85), pouvant être entraîné par ce moteur et logé d'une manière coaxiale par rapport à la broche (84), arbre comportant une fourche d'entraînement (86), s'étendant le long de la broche à l'intérieur du manchon de guidage et coopérant, d'une manière solidaire en rotation, avec ce manchon et/ou avec l'écrou de broche (81).

**11.** Dispositif de mesure selon la revendication 10, caractérisé en ce que la fourche d'entraînement (86) est en prise, avec correspondance de forme, avec les bras de fourche (87, 87'), qui sont parallèles l'un à l'autre, dans des rainures longitudinales de l'écrou de broche (81).

**12.** Dispositif de mesure selon la revendication 11, caractérisé en ce que la fourche d'entraînement (86) du bras d'entraînement (85) est fermée et logée en ses deux extrémités.

FIG.4

FIG.3

FIG.2

FIG.1

FIG.7

FIG.8

FIG.6

FIG.5

FIG.9

FIG.11

FIG.10